## Europäisches Patentamt
## European Patent Office
## Office européen des brevets

(19)

(11) Veröffentlichungsnummer: **0 214 339**
**B1**

(12)

# EUROPÄISCHE PATENTSCHRIFT

(45) Veröffentlichungstag der Patentschrift: **02.01.91**

(51) Int. Cl.⁵: **B 60 P 3/22**

(21) Anmeldenummer: **85113134.2**

(22) Anmeldetag: **16.10.85**

(54) Silofahrzeug.

(30) Priorität: **03.09.85 DE 8525167 u**

(43) Veröffentlichungstag der Anmeldung:
**18.03.87 Patentblatt 87/12**

(45) Bekanntmachung des Hinweises auf die
Patenterteilung:
**02.01.91 Patentblatt 91/01**

(84) Benannte Vertragsstaaten:
**AT BE DE FR GB NL**

(56) Entgegenhaltungen:
DE-A-3 048 868
DE-B-1 261 156
GB-A-1 172 020

**Anzeige Butler Manufacturing Company, April
1974**

(73) Patentinhaber: **Karl Kässbohrer Fahrzeugwerke
GmbH
Kässbohrerstrasse 13 Postfach 2660
D-7900 Ulm (Donau) (DE)**

(72) Erfinder: **Kübler, Dieter
Söflingen Marienweg 84
D-7900 Ulm (DE)**

(74) Vertreter: **Patentanwälte Grünecker, Kinkeldey,
Stockmair & Partner
Maximilianstrasse 58
D-8000 München 22 (DE)**

Courier Press, Leamington Spa, England.

# Beschreibung

Die vorliegende Erfindung betrifft ein Silofahrzeug mit rohrförmigem, auf einem Zugfahrzeug aufliegenden und durch Bodenstücke verschlossenen Druckbehälter mit mindestens einer halbzylindrischen Oberschale und mindestens zwei halbzylindrischen Unterschalen und mit zwei ebenen, Biegespannung aufnehmenden, zwischen Ober- und Unterschale angeordneten Seitenwandteilen.

Solche Silofahrzeug werden beispielsweise für den Transport von Kohlenstaub verwendet. Ein Silofahrzeug ohne Seitenwandteile besitzt einen Druckbehälter, bei welchem der Hauptabschnitt des Druckbehälters zylindrisch ausgebildet ist. An den Hauptabschnitt schließt sich nach vorne ein ebenfalls zylindrischer Abschnitt an, welcher jedoch im Durchmesser kleiner ausgebildet ist. Die obere Mantellinie des vorderen, kleineren Abschnittes fluchtet dabei mit der oberen Mantellinie des Hauptabschnitts. Der Übergang zwischen dem kleineren zylindrischen Abschnitt und dem Hauptabschnitt wird durch einen konischen Zwischenteil überdrückt.

Die zylindrische Ausgestaltung des bekannten Druckbehälters bewirkt, daß die gesamte Behälterwandung lediglich auf Zug beansprucht wird. Mit dem bekannten Behälter ist es zwar bereits möglich, den Laderaum zu vergrößern, da durch die unterschiedlichen Querschnitte der einzelnen Abschnitte des Behälters eine Anpassung des Druckbehälters an die räumlichen Gegebenheiten in Fahrzeuglängsrichtung möglich ist. Dennoch stößt man mit diesem Druckbehälter an Grenzen, da aufgrund der maximal vorgegebenen Breite des Silofahrzeuges eine vollständige Nutzung der maximal zulässigen Höhe des Silofahrzeuges nicht möglich ist.

Eine andere Möglichkeit, einen Druckbehälter den räumlichen Gegebenheiten des Silofahzeuges in Fahrzeuglängsrichtung anzupassen, ist in der gattungsbildenden DE—A—30 48 868 aufgezeigt. Bei dem dort gezeigten Druckbehälter schließt sich an die obere Halbschale nach unten eine Wanne an, welche in den Bereich zwischen Zugfahrzeug und Hinterachse des Silofahrzeuges hineinreicht, so daß der dort vorhandene Platz zumindest teilweise als Laderaum zur Verfügung steht. Zur Verbindung der oberen zylindrischen Halbschale und dem mittleren Teil der Wanne sind beidseitig das Behälters zwei ebene Zwickel eingesetzt.

Aufgabe der Erfindung ist es, ein Silofahrzeug der eingangs genannten Art derart zu verbessern, daß der bezüglich Höhe und Breite des Silofahrzeuges begrenzte Laderaum besser ausgenutzt wird.

Diese Aufgabe wird dadurch gelöst, daß die erste Unterschale einen auf dem Zugfahrzeug aufliegenden, im Querschnitt kleineren, zylindrischen Abschnitt des Druckbehälters bildet und die zweite Unterschale einen sich heckwärts anschließenden, aus voneinander beabstandeten, durch ein bandförmiges im wesentlichen rechteckiges Seitenwandteil verbundenen Ober- und Unterschalen gebildeten Hauptabschnitt des Druckbehälters zur Unterseite hin abschließt, wobei der Übergang zwischen der ersten Unterschale und der zweiten Unterschale durch ein schräg eingesetztes halbzylindrisches Verbindungselement gebildet ist und daß die heckwärtige Stirnseite des Druckbehälters durch eine der aus Ober-, Unterschale und Seitenwandteilen gebildeten Querschnittsform des Hauptabschnittes angepaßtes Bodenstück abgeschlossen ist.

Diese Lösung ermöglicht es trotz ihrer konstruktiven Einfachheit, auf wirksame Weise den zur Verfügung stehenden Platz bestmöglichst als Laderaum zu nutzen. Durch die bewußte Aufteilung des Druckbehälters in biegebeanspruchte und zugbeanspruchte Zonen sind der konstruktiven Gestaltung kaum Grenzen gesetzt. Während man bisher glaubte, Druckbehälter müßten in wesentlichen eine zylindrische Form aufweisen, damit die Behälterwand lediglich Zugbeanspruchungen ausgesetzt ist, wird durch die vorliegende Erfindung ein Weg aufgezeigt, wie durch konsequente Unterteilung der Behälterwandung in biege- und zugbelastete Bereiche eine Vergrößerung des Laderaums ermöglicht werden kann.

Eine besonders einfache Anpassung des Bodenstücks an die Querschnittsform des Hauptabschnitts ergibt sich dadurch, daß das heckseitige Bodenstück aus zwei im wesentlichen halbkalottenförmigen Schalen besteht, die durch eine ebene, um eine Hochachse gebogene und in Höhe der ebenen Seitenwandteile liegende Stirnwand miteinander verbunden sind. Die untere kalottenförmige Schale kann trichterförmig zu einem Ablaß erweitert ausgebildet sein, was insbesondere günstig ist, wenn der Druckbehälter zum Entleeren nach oben verschwenkt wird.

Die Biegesteifigkeit der Seitenwandteile läßt sich in einfacher Weise dadurch erreichen, daß die Seitenwandteile in Sandwich-Bauweise mehrlagig ausgebildet sind.

Auch dadurch, daß die sich gegenüberliegenden Seitenwandteile durch Zuganker miteinander verbunden sind, kann auf einfache Weise erreicht werden, daß auf die halbzylindrische Oberschale und die halbzylindrische Unterschale des Hauptabschnitts nut Zugkräfte übertragen werden.

Im folgenden wird ein Ausführungsbeispiel der Erfindung anhand einer Zeichnung näher erläutert.

Es zeigen:

Figur 1 das erfindungsgemäße Silofahrzeug in einer Seitenansicht,

Figur 2 das Heck des Silofahrzeuges aus Figur 1 in einer vergrößerten Ansicht und

Figur 3 das Silofahrzeug im Querschnitt entlang der Linie III—III aus Figur 1.

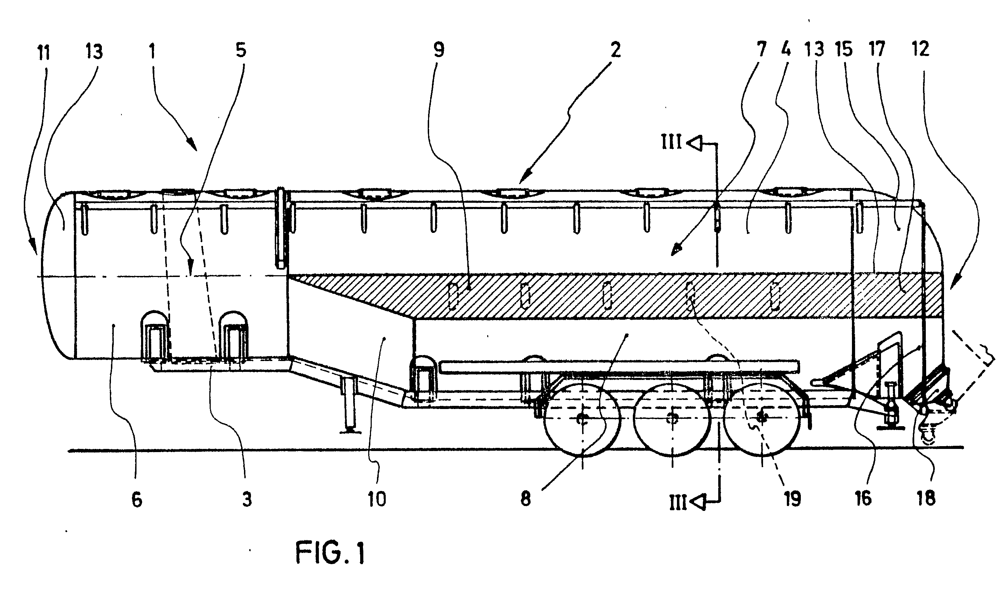

Das in der Figur 1 ohne Zugfahrzeug dargestellte Silofahrzeug 1 besitzt einen rohrförmigen Druckbehälter 2, welcher mit einer Sattelkupplung 3 ausgerüstet ist, mit der an einem hier nicht dargestellten Zugfahrzeug aufgesattelt werden kann.

Der Druckbehälter 2 umfaßt eine halbzylindrische Oberschale 4, welche sich im wesentlichen über die gesamte Länge des Druckbehälters erstreckt. Bei einem ersten Abschnitt 5 des Druckbehälters 2 im Bereich der Sattelkupplung 3 schließt sich an die Oberschale 4 eine halbzylindrische Unterschale 6 an, so daß der erste Abschnitt 5 Zylinderform aufweist.

An den ersten Abschnitt 5 schließt sich heckwärts der Hauptabschnitt 7 des Druckbehälter 2 an. Auch der Hauptabschnitt besitzt eine halbzylindrische Unterschale 8, welche den gleichen Krümmungsradius wie die Oberschale 4 und die vordere Unterschale 6 besitzt. Die Oberschale 4 und die Unterschale 8 sind voneinander beabstandet und zu beiden Seiten des Silofahrzeuges 1 durch ein ebenes Seitenwandteil 9 miteinander verbunden. Das ebene Seitenwandteil 9 erstreckt sich in Form eines Bandes von dem Heck des Silofahrzeuges 1 bis zum ersten Abschnitt 5 des Druckbehälters 2. Der lichte Querschnitt des Hauptabschnittes 7 ist somit größer als der lichte Querschnitt des ersten Abschnittes 5. Der Übergang zwischen der Unterschale 6 des ersten Abschnittes und der Unterschale 8 des Hauptabschnittes 7 wird durch eine schräg eingesetzte zylindrische Halbschale 10 bewerkstelligt. Im Bereich der Halbschale 10 verjüngt sich das Seitenwandteil 9 und läuft schließlich spitz in den ersten Abschnitt 5 aus.

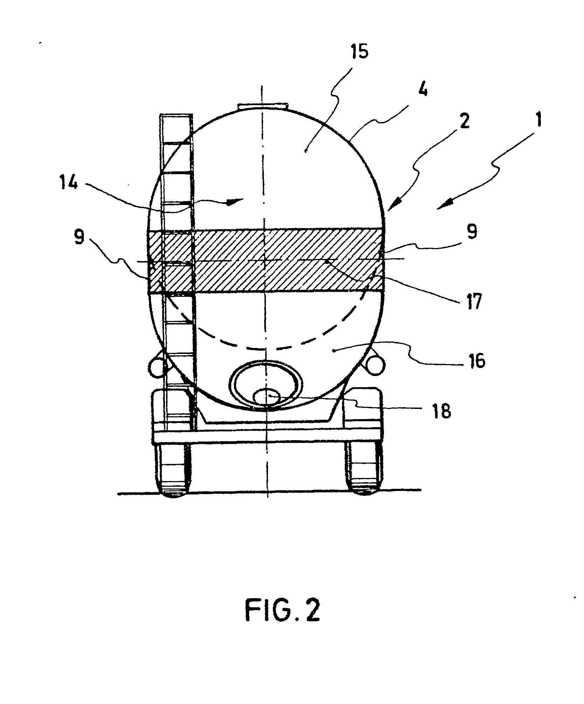

Sowohl die vordere Stirnseite 11 als auch die hintere Stirnseite 12 des Druckbehälters 2 sind durch Bodenstücke 13 bzw. 14 verschlossen. Das die Stirnseite 12 verschließende Bodenstück 14 ist der Querschnittsform des Hauptabschnittes 7 angepaßt. An die halbzylindrische Oberschale 4 schließt sich eine halbkalottenförmige Schale 15 und an die halbzylindrische Unterschale 8 eine im wesentlichen halbkalottenförmige Schale 16 an. Die beiden Schalen 15 und 16 sind durch eine ebene, um eine gedachte Hochachse gebogene und in Höhe der eben Seitenwandteile 9 liegende Stirnwand 17 miteinander verbunden (vergleiche Figur 2). Der Ausdruck "eben" bedeutet im Zusammenhang mit der Stirnwand 17, daß diese nicht sphärisch, sonder lediglich um eine Raumachse gekrümmt ausgebildet ist.

Die untere Schale 16 des Bodenstückes 14 ist trichterförmig zu einem Ablaß ausgebildet und durch einen Ablaßdeckel 18 verschlossen.

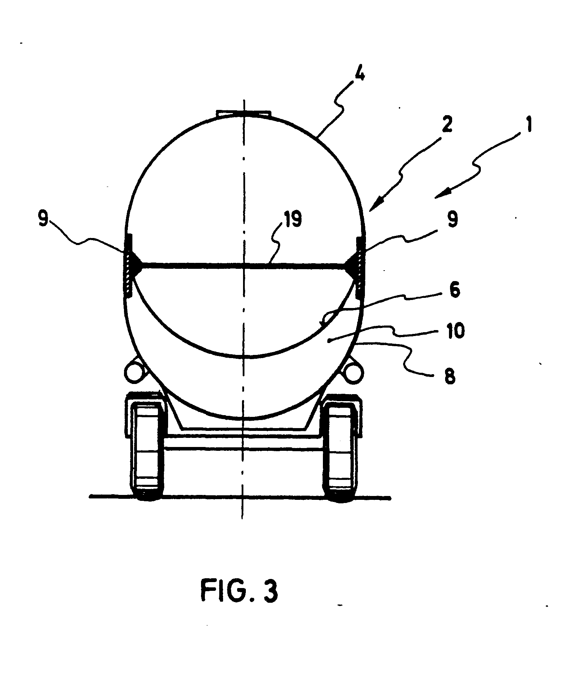

Wie besonders gut aus der Schnittansicht in Figur 3 ersichtlich ist, sind die Seitenwandteile 9 in biegesteifer Sandwich-Bauweise ausgebildet. Die beiden sich gegenüberliegenden Seitenwandteile 9 sind durch Zuganker 19 miteinander verbunden, von denen in Fahrzeuglängsrichtung je nach konstruktiven Erfordernissen mehrere vorgesehen sind (vergl. Figur 1).

Die Wirkungsweise der Erfindung besteht darin, daß durch die "ovale" Querschnittsgestaltung des Hauptabschnittes 7 des Druckbehälters 2 die Ladehöhe des Druckbehälters 2 beträchtlich vergrößert wird. Dadurch, daß die durch den unsymmetrischen Querschnitt des Hauptabschnittes 7 entstehenden Biegebeanspruchungen durch die sich gegenüberliegenden Seitenwandteile aufgenommen werden, sind an des halbzylindrischen Ober- und Unterschalen 4 und 8 keine besonderen Versteifungen erforderlich. Die Ober- und Unterschale 4 und 8 müssen, wei bei den aus dem Stand der Technik bekannten Silofahrzeugen, lediglich Zugspannungen aufnehmen. Damit ist die konstruktive Änderung trotz der beträchtlichen Vergrößerung des nunmehr nutzbaren Laderaums auf ein Minimum beschränkt.

**Patentansprüche**

1. Silofahrzeug mit rohrförmigem, auf einem Zugfahrzeug aufliegenden und durch Bodenstücke verschlossenen Druckbehälter mit mindestens einer halbzylindrischen Oberschale und mindestens zwei halbzylindrischen Unterschalen, und mit zwei ebenen, Biegespannungen aufnehmenden, zwischen Ober- und Unterschale angeordneten Seitenwandteilen, dadurch gekennzeichnet, daß die erste Unterschale (6) einen auf dem Zugfahrzeug aufliegenden, im Querschnitt kleineren, zylindrischen Abschnitt (5) des Druckbehälters (2) bildet und die zweite Unterschale (8) einen sich heckwärts anschließenden, aus voneinander beabstandeten, durch ein bandförmiges im wesentlichen rechteckiges Seitenwandteil (9) verbundenen Ober- (4) und Unterschalen (8) gebildeten Hauptabschnitt (7) des Druckbehälters (2) zur Unterseite hin abschließt, wobei der Übergang zwischen der ersten Unterschale (6) und der zweiten Unterschale (8) durch ein schräg eingesetztes, halbzylindrisches Verbindungselement (10) gebildet ist, und daß die heckwärtige Stirnseite (12) des Druckbehälters (2) durch ein der aus Ober- (4) und Unterschale (8) und Seitenwandteilen (9) gebildeten Querschnittsform des Hauptabschnittes (7) angepaßtes Bodenstück (14) abgeschlossen ist.

2. Silofahrzeug nach Anspruch 1, dadurch gekennzeichnet, daß das heckseitige Bodenstück (14) aus zwei im wesentlichen halbkalottenförmigen Schalen (15, 16) besteht, die durch eine ebene, um eine Hochachse gebogene und in Höhe der ebenen Seitenwandteile (9) liegende Stirnwand (17) miteinander verbunden sind.

3. Silofahrzeug nach Anspruch 2, dadurch gekennzeichnet, daß die untere halbkalottenförmmige Schale (16) trichterförmig zu einem Ablaß erweitert ausgebildet ist.

4. Silofahrzeug nach mindestens einem der Ansprüche 1 bis 3, dadurch gekennzeichnet, daß die Seitenwandteile (9) in Sandwich-Bauweise mehrlagig ausgebildet sind.

5. Silofahrzeug nach mindestens einem der Ansprüche 1 bis 4, dadurch gekennzeichnet, daß die sich gegenüberliegenden Seitenwandteile (9) durch Zuganker (19) miteinander verbunden sind.

**Revendications**

1. Silo-véhicule avec un réservoir sous pression tubulaire qui, posé sur un tracteur et fermé par des éléments formant fond, comporte au mons une enveloppe semi-cylindrique supérieure et au moins deux enveloppes semi-cylindriques inférieures ainsi que deux parties formant parois latérales planes montées entre les enveloppes supérieur et inférieure et qui résorbent des contraintes de flexion, caractérisé en ce que la première enveloppe inférieure (6) forme une partie cylindrique (5), posée sur le tracteur et présentant une section réduite, du réservoir sous pression (2) et en ce que la seconde enveloppe inférieure (8) ferme vers le bas une partie principale (7) du réservoir sous pression (2), laquelle fait suite du côté arrière la première partie cylindrique et est constituée par des enveloppes supérieure (4) et inférieure (8) distantes l'une de l'autre et reliées entre elles par une partie (9) formant paroi latérale en forme de bande sensiblement rectangulaire, la transition entre la première enveloppe inférieure (6) et la seconde enveloppe inférieure (8) étant formée d'un elément de liaison semi-cylindrique (10) mis en place obliquement et en ce que côté frontal arrière (12) du réservoir sous pression (2) est fermé par un élément (14) formant fond adapté à la forme de section de la partie principale (7) formée de l'enveloppe supérieure (4) de l'enveloppe inférieure (8) et des parties (9) formant parois latérales.

2. Silo-véhicule selon la revendication 1, caractérisé en ce que l'élément (14) formant fond arrière est constitue de deux enveloppes (15, 16) sensiblement en forme de demi-calottes et qui sont reliées entre elles par une paroi frontale plane, recourbée autour d'un axe vertical et disposée à la hauteur des parties planes (9) formant parois latérales.

3. Silo-véhicule selon la revendication 2, caractérisé en ce que l'enveloppe inférieure (16) en forme de demi-calotte est élargie en forme d'entonnoir pour former une sortie d'écoulement.

4. Silo-véhicule selon l'une quelconque des revendications précédentes, caractérisé en ce que les parties (9) formant parois latérales sont réalisées en sandwich à plusieurs couches.

5. Silo-véhicule selon l'une quelconque des revendications précédentes, caractérisé en ce que des parties (9) formant parois latérales opposées sont reliées entre elles par des tirants d'ancrage (19).

**Claims**

1. Silo vehicle with tubular pressure tank, accommodated on a trailer and sealed by bottom sections, with at least one semi-cylindrical top shell and at least two semi-cylindrical bottom shells, and with two plane lateral-wall sections, which receive bend stress and are arranged between top shell and bottom shell, characterised in that the first bottom shell (6) forms a cylindrical section (5) of the pressure tank (2), which section is accommodated on the towing vehicle and smaller in cross-section, and the second bottom shell (8) seals off a rearward adjacent main section (7) of the pressure tank (2) towards the bottom, which section is formed by upper- (4) and lower shells (8), which are distanced from one another and connected by a band-shaped substantially rectangular lateral-wall section (9), in which respect the transition from the first bottom shell (6) to the second bottom shell (8) is formed by an inclined inserted semi-cylindrical connecting element (10), and that the rearward face side (12) of the pressure tank (2) is sealed off by a bottom section (14), shaped by the cross-sectional shape of the main section (7), which shape is formed by the upper- (4) and bottom shell (8) and lateral-wall sections (9).

2. Silo vehicle according to claim 1, characterised in that the rearward bottom section (14) consists of two substantially semi-calotte shaped shells (15, 16), which are connected to one another by a plane face wall (17), bent around a perpendicular axis and disposed at the height of the plane lateral-wall sections (9).

3. Silo vehicle according to claim 2, characterised in that the lower calotte-shaped shell (16) can be expanded funnelshaped towards an outlet.

4. Silo vehicle according to at least one of claims 1 to 3, characterised in that the lateral-wall sections (9) are constructed to be multilayered in sandwich construction.

5. Silo vehicle according to at least one of claims 1 to 4, characterised in that oppositely disposed lateral-wall sections (9) are connected to one another by tension anchors (19).

FIG.1

FIG.2

FIG. 3